# EUROPEAN PATENT SPECIFICATION

(11) **EP 1 149 390 B1**
(45) Date of publication and mention of the grant of the patent: **06.04.2011**
(21) Application number: 99965500.4
(22) Date of filing: 20.12.1999
(51) Int. Cl.: H01B 7/295, C09K 21/02

(54) **PROCESS FOR PRODUCING SELF-EXTINGUISHING CABLES WITH LOW-LEVEL PRODUCTION OF FUMES AND FLAME-RETARDANT COMPOSITIONS USED THEREIN**
VERFAHREN ZUR HERSTELLUNG VON SELBSTVERLÖSCHENDEN KABELN MIT NIEDRIGER RAUCHABGABE UND FLAMMHEMMENDE ZUSAMMENSETZUNGEN DAFÜR
PROCEDE DE PRODUCTION DE CABLES AUTO-EXTINGUIBLES DEGAGEANT PEU DE FUMEES, ET IGNIFUGES A CET EFFET

(30) Priority: 24.12.1998 EP 98124648
(43) Date of publication of application: 31.10.2001
(73) Proprietor: Prysmian S.p.A., 20126 Milano (IT)
(72) Inventor: PERUZZOTTI, Franco, I-20025 Legnano (IT); TIRELLI, Diego, I-20099 Sesto San Giovanni (IT); LIBOI, Paolo, I-20097 San Donato Milanese (IT); ALBIZZATI, Enrico, I-28040 Lesa (IT)
(74) Representative: Checcacci, Giorgio
(86) International application number: PCT/EP1999/010131
(87) International publication number: WO 2000/039810

(56) References cited:
- EP-A- 0 718 388
- WO-A-83/04041

## Description

The present invention relates to a process for producing cables, in particular electrical cables for low-voltage power transmission or for telecommunications, these cables having self-extinguishing properties and producing a low level of fumes, and to the flame-retardant compositions used therein.

Self-extinguishing cables are generally produced by extruding over the core of the cable a flame-retardant coating consisting of a polymer composition which has been given flame-resistant properties by the addition of a suitable additive. Polyolefin-based compositions based, for example, on polyethylene or ethylene/vinyl acetate copolymers, containing an organic halide combined with antimony trioxide as flame-retardant additive can, for example, be used for this purpose. However, halogenated flame-retardant additives have many drawbacks since they partially decompose during processing of the polymer, giving rise to halogenated gases that are toxic to workers and corrode the metal parts of the polymer-processing equipment. In addition, when they are placed directly in -a flame, their combustion gives rise to very large amounts of fumes containing toxic gases. Similar drawbacks are encountered when polyvinyl chloride (PVC) with added antimony trioxide is used as base polymer.

Thus, in recent years, use has been made of halogen-free compounds in the production of self-extinguishing cables, in which a polymer base, generally of polyolefin type, is mixed with inorganic flame-retardant fillers, generally hydroxides, hydrated oxides or hydrated salts of metals, in particular of aluminium or magnesium, such as magnesium hydroxide or alumina trihydrate, or mixtures thereof (see, for example, patents US 4,145,404, US 4,673,620, EP 328,051 and EP 530,940).

The inorganic fillers can be used as they are or coated with various hydrophobic products, for example with saturated or unsaturated fatty acids or salts thereof, in particular oleic acid or stearic acid or the corresponding oleates or stearates, or with organic silanes or titanates.

For example, patent application WO 96/27885 describes a flame-retardant composition for coating electrical cables, comprising polypropylene as polymer matrix supplemented with 1-20 % by weight of a polyethylene wax and 100-200 % by weight of magnesium hydroxide coated with a hydrophobic product, for example an alkylsilane (% by weight relative to the weight of the polypropylene). This coating is said to increase the compatibility between the filler and the polymer matrix and at the same time to impart hydrophobic properties to the flame-retardant coating, thus avoiding the absorption of moisture which would reduce the efficiency of the insulating properties of the material.

Japanese patent application JP-07-161,230 (Kokai) describes polymer compositions with flame-retardant properties, containing appropriately ground natural magnesium hydroxide which has been surface-treated with a fatty acid or a salt thereof, or with a silane or a titanate, in amounts of between 0.5 and 5 % by weight relative to the weight of the hydroxide. As described in that patent application, surface treatment of the filler is said to make it possible to reduce the absorption of moisture, thus preventing the water vapour released from the filler during the extrusion of the composition on the cable from effecting a kind of expansion of the material and a worsening of the surface appearance of the cable thus obtained.

The Applicant has observed that, in the production of self-extinguishing cables in which an inorganic filler as described above is used, coating of this filler with hydrophobic agents, as indicated in the prior art, is not sufficient to obtain a satisfactory result which is reproducible on an industrial scale, in particular when the process for extruding the flame-retardant composition is carried out at elevated temperatures in order to increase the fluidity and thus the processibility of the composition so as to obtain high extrusion rates and thus high productivity. Specifically, the Applicant has often observed, with flame-retardant fillers which are either coated or non-coated, and in particular with those of natural origin (i.e. obtained from minerals rather than by synthesis), the formation of a coating layer of unsatisfactory appearance, which has a dull, rough surface. In addition, in certain cases, the formation of pores inside the flame-retardant layer has been observed, with a consequent reduction in the mechanical properties of this coating.

The Applicant has now found that it is possible to obtain a self-extinguishing cable with a flame-retardant coating which is substantially free of pores and which has a smooth and uniform outer surface, if a dehydrating agent is added to the composition comprising a polymer base and an inorganic flame-retardant filler. This dehydrating agent can be added to the flame-retardant composition during the mixing (compounding) phase or directly upstream of the extruder.

In a first aspect, the present invention thus relates to a process for producing self-extinguishing cables with low-level production of fumes, which comprises:
(a) preparing a flame-retardant composition comprising a polymer base and an inorganic flame-retardant filler;
(b) extruding said flame-retardant composition on an electrical conductor, which is optionally precoated with an insulating layer, so as to obtain a flame-retardant coating layer;
   characterized in that a dehydrating agent is added to said flame-retardant composition.

According to a first embodiment of the invention, the dehydrating agent is added during phase (a) of preparation of the flame-retardant composition.

In a preferred embodiment, the dehydrating agent is added during phase (a) of preparation of the flame-retardant composition after a first phase of mixing the composition at a predetermined temperature and for a predetermined time so as to reduce the moisture content present in the flame-retardant filler.

According to a further embodiment of the invention, the dehydrating agent is added during phase (b) of extrusion of the flame-retardant composition.

According to a further aspect, the present invention relates to a flame-retardant composition comprising a polymer base and an inorganic flame-retardant filler, characterized in that it also comprises a dehydrating agent.

In the Applicant's perception, the dehydrating agent exerts its action by absorbing the water present in the flame-retardant filler, which is released during the heating of the composition in the extrusion phase. The mechanism of absorption is preferably of irreversible type, or the dehydrating agent can absorb the water reversibly but with a low rate of release of the moisture at the extrusion temperature, so as to ensure the virtual absence of water in the vapour state during the extrusion phase. Working in this way prevents the formation of pores inside the flame-retardant coating and/or the appearance of roughness on its surface. The amount of water released increases as the extrusion temperature increases, as a result of which the advantages deriving from the presence of the dehydrating agents become particularly evident when relatively high extrusion temperatures, generally above 180°C, preferably above 200°C, are used.

In addition, the Applicant has found that the effect of the dehydrating agent on the surface appearance and on the mechanical properties of the flame-retardant coating is particularly evident when flame-retardant fillers of natural origin are used, for example magnesium hydroxide obtained by grinding minerals such as brucite. The reason for this is thought to be that a flame-retardant filler of natural origin contains large amounts of moisture, greater than the amounts typically found in synthetic flame-retardant fillers. The moisture present can derive either from the starting mineral or from the grinding process to which this mineral is subjected, or can be absorbed from the surroundings.

Dehydrating agents which can be used are readily available inorganic compounds which are easy to handle, which do not adversely effect the mechanism of action of the flame-retardant filler and which do not produce toxic products if they are heated to high temperature or exposed to the direct action of a flame. In particular, the dehydrating agent can be chosen from: calcium oxide, calcium chloride, anhydrous alumina, zeolites, magnesium sulphate, magnesium oxide, barium oxide, or mixtures thereof. Calcium oxide and zeolites, or mixtures thereof, are particularly preferred.

The amount of dehydrating agent to be added to the flame-retardant composition is mainly predetermined as a function of the nature and efficacy of this agent and on the amount of water present in the flame-retardant filler. In general, it is believed that an amount of dehydrating agent of between 0.5 and 15 % by weight, preferably between 1 and 10 % by weight, relative to the weight of the flame-retardant filler, is sufficient to ensure a satisfactory result.

Flame-retardant fillers which can generally be used are hydroxides, hydrated oxides, salts or hydrated salts of metals, in particular of calcium, aluminium or magnesium, such as: magnesium hydroxide, alumina trihydrate, hydrated magnesium carbonate, magnesium carbonate, hydrated calcium and magnesium carbonate, calcium and magnesium carbonate, or mixtures thereof. Magnesium hydroxide is particularly preferred, since it is characterized by a decomposition temperature of about 340°C and thus allows high extrusion temperatures to be used. It is more particularly preferred to use magnesium hydroxide of natural origin, obtained by grinding minerals based on magnesium hydroxide, such as brucite, as described in European patent application WO 99/05688, filed on 01.12.97 by the Applicant and in the publication on Research Disclosure No. 407 (March 1998).

The flame-retardant filler is generally used in the form of particles which are untreated or surface-treated with saturated or unsaturated fatty acids containing from 8 to 24 carbon atoms, or metal salts thereof, such as, for example: oleic acid, palmitic acid, stearic acid, isostearic acid, lauric acid; magnesium or zinc stearate or oleate. In order to increase the compatibility with the polymer matrix, the flame-retardant filler can likewise be surface-treated with suitable coupling agents, for example organic silanes or titanates such as vinyltriethoxysilane, vinyltriacetylsilane, tetraiso-propyl titanate, tetra-n-butyl titanate.

The amount of flame-retardant filler to be added is predetermined so as to obtain a cable which is capable of passing the ordinary fire-resistance tests, for example the test according to standards IEC 332-1 and IEC 332.3 A,B,C. In general, this amount is between 10 and 90 % by weight, preferably between 30 and 80 % by weight, relative to the total weight of the flame-retardant composition.

The polymer base can generally be chosen from:
polyolefins, various olefin copolymers, copolymers of olefins with ethylenically unsaturated esters, polyesters, polyethers, polyether/polyester copolymers, and mixtures thereof.

Examples of such polymers are: high-density polyethylene (HDPE) (d=0.940-0.970 g/cm³), medium-density polyethylene (MDPE) (d=0.926-0.940 g/cm³), low-density polyethylene (LDPE) (d=0.910-0.926 g/cm³); copolymers of ethylene with α-olefins containing from 3 to 12 carbon atoms (for example 1-butene, 1-hexene, 1-octene), in particular linear low-density polyethylene (LLDPE) and ultra-low-density polyethylene (ULDPE) (d=0.860-0.910 g/cm³); polypropylene (PP); thermoplastic copolymers of propylene with another olefin, in particular ethylene; copolymers of ethylene with at least one ester chosen from alkyl acrylates, alkyl methacrylates and vinyl carboxylates, in which the linear or branched alkyl group can contain from 1 to 8, preferably from 1 to 4, carbon atoms, while the linear or branched carboxylic group can contain from 2 to 8, preferably from 2 to 5, carbon atoms, in particular ethylene/vinyl acetate (EVA) copolymers; ethylene/ethyl acrylate (EEA) copolymers, ethylene/butyl acrylate (EBA) copolymers; ethylene/α-olefin rubbers, in particular ethylene/propylene rubbers (EPR), ethylene/propylene/diene rubbers (EPDM); natural rubber; butyl rubbers; and mixtures thereof.

Copolymers which are particularly preferred are those which can be obtained by copolymerization of ethylene with at least one α-olefin containing from 3 to 12 carbon atoms, and optionally with a diene, in the presence of a "single-site" catalyst, in particular a metallocene catalyst or a constrained geometry catalyst. These copolymers are characterized by a density of between 0.860 and 0.904 g/cm³, preferably from 0.865 to 0.902 g/cm³, and by a composition distribution index greater than 45 %, said index being defined as the percentage by weight of the copolymer molecules having an α-olefin content of up to 50 % of the total average molar content of α-olefin. These copolymers preferably have the following monomer composition: 75-97 mol%, preferably 90-95 mol%, of ethylene; 3-25 mol%, preferably 5-10 mol%, of α-olefin; 0-5 mol%, preferably 0-2 mol%, of a diene. The α-olefin is preferably chosen from propylene, 1-butene, 1-hexene, 1-octene. Products of this type are commercially available under the tradenames Engage® from Du Pont-Dow Elastomers and Exact® from Exxon Chemical.

The ethylene copolymers obtained by single-site catalysis are preferably used as a mixture with a crystalline propylene homopolymer or copolymer, as described, for example, in the abovementioned European patent application No. 97121042.2, or with an ethylene homopolymer or copolymer which has a density of between 0.905 and 0.970 g/cm³, preferably between 0.910 and 0.940 g/cm³, as described, for example, in European patent application No. 98118194.4 filed on 25.9.98 in the name of the Applicant, or alternatively in US patent 5,707,732. In particular, the polymer base preferably comprises from 5 to 60 % by weight, more preferably from 10 to 45 % by weight, of a propylene or ethylene homopolymer or copolymer as defined above, and from 40 to 95 % by weight, more preferably from 55 to 90 % by weight, of an ethylene copolymer obtained by single-site catalysis, the percentages being relative to the total weight of the polymeric components (a) and (b).

A coupling agent capable of increasing the interaction between the active groups of the flame-retardant filler and the polymer chains may be added to the mixture in order to enhance the compatibility between the flame-retardant filler and the polymer matrix. This coupling agent can be chosen from those known in the art, for example: saturated silane compounds or silane compounds containing at least one ethylenic unsaturation; epoxides containing an ethylenic unsaturation; monocarboxylic acids or, preferably, dicarboxylic acids having at least one ethylenic unsaturation, or derivatives thereof, in particular anhydrides or esters.

Examples of silane compounds which are suitable for this purpose are: γ-methacryloxypropyltrimethoxysilane, allyltrimethoxysilane, allyltriethoxysilane, allylmethyldimethoxysilane, allylmethyl-diethoxysilane, methyltriethoxysilane, methyltris-(2-methoxyethoxy)silane, dimethyldiethoxysilane, vinyltris(2-methoxyethoxy)silane, vinyltrimethoxysilane, vinylmethyldimethoxysilane, vinyltriethoxysilane, octyltriethoxysilane, isobutyltri-ethoxysilane, isobutyltrimethoxysilane, or mixtures thereof.

Examples of epoxides containing an ethylenic unsaturation are: glycidyl acrylate, glycidyl methacrylate, monoglycidyl ester of itaconic acid, glycidyl ester of maleic acid, vinyl glycidyl ether, allyl glycidyl ether, or mixtures thereof.

Monocarboxylic or dicarboxylic acids, having at least one ethylenic unsaturation, or derivatives thereof, which can be used as coupling agents are, for example: maleic acid, maleic anhydride, fumaric acid, citraconic acid, itaconic acid, acrylic acid, methacrylic acid, and anhydrides or esters derived from these, or mixtures thereof. Maleic anhydride is particularly preferred.

The coupling agents can be used as they are or pregrafted onto a polyolefin, for example polyethylene or copolymers of ethylene with an α-olefin, by means of a radical reaction (see for example patent EP-530,940). The amount of coupling agent grafted is generally between 0.05 and 5 parts by weight, preferably between 0.1 and 2 parts by weight, relative to 100 parts by weight of polyolefin. Polyolefins grafted with maleic anhydride are available as commercial products known, for example, under the brand names Fusabond^{®} (Du Pont), Orevac^{®} (Elf Atochem), Exxelor^{®} (Exxon Chemical), Yparex^{®} (DSM), etc.

Alternatively, the coupling agents of carboxylic or epoxide type mentioned above (for example maleic anhydride) or the silanes with ethylenic unsaturation (for example vinyltrimethoxysilane) can be added to the mixture in combination with a radical initiator so as to graft the compatibilizing agent directly onto the polymer matrix. An organic peroxide such as tert-butyl perbenzoate, dicumyl peroxide, benzoyl peroxide, di-tert-butyl peroxide can, for example, be used as initiator. This method is described, for example, in patent US-4,317,765, in Japanese patent application JP-62-58774 or alternatively in the abovementioned European patent applications Nos. 97121042.2 and 98118194.4.

The amount of coupling agent to be added to the mixture can vary mainly depending on the type of coupling agent used and on the amount of flame-retardant filler added, and is generally between 0.01 and 5%, preferably between 0.05 and 2%, by weight relative to the total weight of the base polymer mixture.

Other conventional components such as antioxidants, processing coadjuvants, lubricants, pigments, other fillers can be added to the compositions according to the present invention.

Conventional antioxidants which are suitable for this purpose are, for example:
polymerized trimethyldihydroquinoline, 4,4'-thiobis (3-methyl-6-tert-butyl)phenol; pentaerythryl terra-[3-(3,5-di-tert-butyl-4-hydroxyphenyl)propionate], 2,2'-thiodiethylene bis[3-(3,5-di-tert-butyl-4-hydroxyphenyl)propionate], or mixtures thereof.

Other fillers which may be used in the present invention include, for example, glass particles, glass fibres, calcined kaolin, talc, or mixtures thereof. Processing co-adjuvants usually added to the polymer base are, for example, calcium stearate, zinc stearate, stearic acid, paraffin wax, silicone rubbers, or mixtures thereof.

The flame-retardant compositions according to the present invention are preferably used in non-crosslinked form, in order to obtain a coating with thermoplastic properties which is thus recyclable.

The flame-retardant compositions according to the present invention can be prepared by mixing the polymer base, the flame-retardant filler, the dehydrating agent and the other additives which may be present according to techniques known in the art, for example using an internal mixer of the type containing tangential rotors (Banbury) or interlocking rotors, or in continuous mixers of the Ko-Kneader (Buss)type or of the co-rotating or counter-rotating twin-screw type.

The dehydrating agent is introduced after a first phase of processing the composition during which, on account of the heating generated by the compounding process, the flame-retardant filler loses a certain amount of the moisture absorbed. In this way, premature depletion of the water-absorbing capacity of the dehydrating filler is avoided, this filler needing to be active mainly during the subsequent extrusion phase. The temperature of the composition in this first compounding phase is at least 100°C, preferably at least 150°C, and is carried out for a period of at least 5 minutes.

Alternatively, rather than adding the dehydrating agent during the phase of preparation of the flame-retardant composition, it can be added during the extrusion phase, for example via the extruder hopper.

In both cases, the dehydrating agent can be added to the flame-retardant composition in divided form (granules, powder), optionally coated with dispersing and protective agents, such as microwaxes, fatty acids. Alternatively, in order to improve its dispersion in the polymer base, the dehydrating agent can be used predispersed in a polymer material (for example a semicrystalline ethylene/propylene rubber).

During the extrusion phase, the flame-retardant compositions thus obtained can be used to coat the conductor directly, or to make an outer sheath on the conductor which has been precoated with an insulating layer. When two layers are present, the extrusion can take place in two separate phases, the inner layer being extruded on the conductor in a first passage and the outer layer being extruded on the inner layer in a second passage. Advantageously, the coating process can take place in a single passage, for example by means of the "tandem" technique, in which two separate extruders arranged in series are used, or alternatively by coextrusion with a single extrusion head.

The temperature at which the flame-retardant composition is extruded can vary within a wide range and is predetermined as a function of the extrusion rate to be obtained. The extrusion rate in fact depends on the viscosity of the composition in the molten state and thus on its temperature. In turn, the viscosity depends mainly on the type of polymer base and on the type and amount of flame-retardant filler used. The minimum extrusion temperature for the composition is generally not less than the plasticization temperature of the polymer base, while the maximum extrusion temperature is predetermined so as to avoid degradation or decomposition of the polymer base and/or of the flame-retardant filler. Thus, on the basis of the abovementioned criteria, in the case of flame-retardant compositions based on a mixture of polypropylene and abovementioned criteria, in the case of flame-retardant compositions based on a mixture of polypropylene and ethylene/α-olefin copolymers as described above, in which magnesium hydroxide is used as flame-retardant filler, the temperature at which the flame-retardant composition is extruded is generally between 160°C and 320°C, preferably between 200°C and 280°C.

Although the present description is mainly directed towards the production of self-extinguishing cables by extrusion, the advantages deriving from the use of the dehydrating agent according to the present invention can be evident in different extrusion or moulding processes for the general production of rubber articles in which hygroscopic fillers are used, for example junction boxes for electrical cable junctions or terminals, in particular when high processing temperatures are required in order to obtain increased fluidity of the material to be extruded or moulded.

Some examples of embodiments will now be reported for the purpose of illustrating the present invention more clearly, with particular reference to the attached:

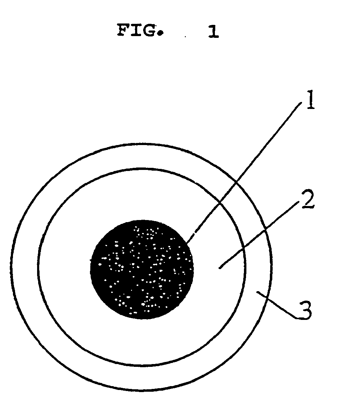

Figure 1, which is a schematic drawing in cross-section of a self-extinguishing, low-voltage unipolar electrical cables which can be made according to the present invention.

The term "low-voltage" generally means a voltage of less than 2 kV, preferably less than 1 kV.

The cable in Fig. 1 comprises a conductor (1), an inner layer (2) which functions as an electrical insulator, and an outer layer (3) which functions as a protective sheath with flame-retardant properties.

The inner layer (2) can consist of a crosslinked or non-crosslinked, halogen-free polymer composition with electrical insulation properties, which is known in the art, chosen, for example, from: polyolefins (homopolymers or copolymers of various olefins), and mixtures thereof. Examples of such polymers are: polyethylene (PE), in particular linear low-density PE (LLDPE); polypropylene (PP); propylene/ethylene thermoplastic copolymers; ethylene/propylene rubbers (EPR) or ethylene/propylene/diene rubbers (EPDM); natural rubbers; butyl rubbers; ethylene/vinyl acetate (EVA) copolymers; ethylene/methyl acrylate (EMA) copolymers; ethylene/ethyl acrylate (EEA) copolymers; ethylene/butyl acrylate (EBA) copolymers; ethylene/α-olefin copolymers.

Alternatively, a self-extinguishing cable which can be made according to the present invention can consist of a conductor coated directly with the flame-retardant composition, without interposition of other insulating layers. In this way, the flame-retardant coating also functions as an electrical insulator. A thin polymer layer which functions as an anti-abrasive agent, optionally combined with a suitable pigment in order to give a coloration for identification purposes, can then be added externally.

### Preparation of the flame-retardant compositions

The flame-retardant compositions were prepared in a closed Banbury mixer (mixing chamber volume: 1200 cm³) filled to a volumetric level of 95 %. The mixing was carried out in two phases. In the first phase, the components of the compound, with the exception of the dehydrating agent, were mixed together until a temperature of about 200°C was reached, so as to ensure good dispersion of the components and to reduce the amount of moisture present in the filler. The dehydrating agent was then added, while keeping the mixing temperature at about 200°C.

### Mechanical properties

Self-extinguishing cables were produced by extruding the compositions prepared as described above on a wire of red copper (cross-section 2.5 mm²) in an extruder with a cylinder 120 mm in diameter and with a on a wire of red copper (cross-section 2.5 mm²) in an extruder with a cylinder 120 mm in diameter and with a length equal to 25 diameters (final thickness of the flame-retardant layer: 0.8 mm). The temperature of the composition in the extruder was kept at about 250°C, with an extrusion rate of 900 m/min.

The flame-retardant coatings thus obtained were subjected to mechanical tensile strength tests according to CEI standard 20-34 § 5.1. The results are given in Table 1, as the average value obtained over five samples taken at random from each cable produced. All of the cables produced passed the flame-resistance test according to IEC standard 332-1, which consists in subjecting a 60 cm long sample, placed vertically, to the direct action of a Bunsen-burner flame applied for 1 min at an angle of 45° relative to the sample.

**TABLE 1**

| Example | 1 | 2 | 3 | 4 (*) | 5 | 6 (*) |
|---|---|---|---|---|---|---|
| Engage® 8003 | 85 | 85 | 85 | 85 | 85 | 85 |
| Moplen® EP1X35HF | 15 | 15 | 15 | 15 | 15 | 15 |
| Hydrofy® G 1.5 | 210 | 210 | 210 | 210 | -- | -- |
| Hydrofy® G 1.5S | -- | -- | -- | -- | 210 | 210 |
| Peroximon® DC40 | 0.4 | 0.4 | 0.4 | 0.4 | 0.4 | 0.4 |
| Silquest® A-172 | 1.8 | 1.8 | 1.8 | 1.8 | 1.8 | 1.8 |
| Irganox® 1010 | 0.8 | 0.8 | 0.8 | 0.8 | 0.8 | 0.8 |
| Irganox® MD1024 | 0.3 | 0.3 | 0.3 | 0.3 | 0.3 | 0.3 |
| Stearic acid | 1.5 | 1.5 | 1.5 | 1.5 | 1.5 | 1.5 |
| Kezadol® GR | 2 | 6 | 10 | -- | 6 | -- |

| Mechanical properties on cable extruded at 900 m/min | | | | | | |
|---|---|---|---|---|---|---|
| Breaking load (MPa) | 14.0 | 13.8 | 12.2 | 14.2 | 13.5 | 13.0 |
| Elongation at break (%) | 122 | 140 | 159 | 90 | 157 | 105 |

| | | | | | | |
|---|---|---|---|---|---|---|
| (*) comparative | | | | | | |

Engage® 8003 - ethylene/1-octene copolymer obtained by metallocene catalysis:
ethylene/1-octene weight ratio = 82/18 (5.5 mol% of 1-octene); d = 0.885 g/cm³; MFI = 1.0 g/10'; CDI > 70 %; ΔH_{2f} = 55.6 J/g;

Moplen® EP1X35HF - random crystalline propylene/ethylene copolymer:
d = 0.900 g/cm³; MFI = 9.0 g/10'; T_{2f} = 154 °C; ΔH_{2f} = 90.6 J/g;
   Hydroxy® G 1.5 - natural magnesium hydroxide, obtained
   by grinding brucite, not surface-treated (SIMA company) with specific surface area: 10.4 m²/g;
   Hydrofy® G 1.5S - natural magnesium hydroxide, obtained by grinding brucite, surface-treated with stearic acid (SIMA company) with specific surface area: 10.4 m²/g;

Silquest® A-172 - coupling agent:
vinyltris(2-methoxyethoxy)silane (VTMOEO);
   Peroximon® DC40 - peroxidic initiator: dicumyl peroxide; Irganox® 1010 - antioxidant:
   pentaerythryl tetrakis[3-(3,5-di-tert-butyl-4-hydroxyphenyl) propionate] (Ciba-Geigy);
Irganox® MD1024 - metal deactivator: 1,2-bis(3,5-di-tert-butyl-4-hydroxyhydrocinnamoyl)hydrazine (Ciba-Geigy) ;
Kezadol® GR - calcium oxide predispersed in semicrystalline EPR rubber (80 % by weight of CaO), in the form of granules with average diameter 6-7 µm (Kettlitz company).

The results given in Table 1 demonstrate clearly that in the cables produced in the presence of calcium oxide, the flame-retardant coating has excellent mechanical properties. In contrast, the comparative cables, produced without dehydrating agent, show unsatisfactory mechanical properties and are not capable of passing the specifications required for cables of this type (usually a breaking load greater than 12.5 MPa and an elongation at break greater than 125 %). Under visual examination, the comparative cables show a dull surface with the presence of micropores inside the flame-retardant coating, these defects being entirely absent from the cables produced according to the invention.

## Claims

1. Process for producing a self-extinguishing cable with low-level production of fume which comprises:
(a) preparing a flame-retardant composition comprising a polymer base, an inorganic flame-retardant filler and a dehydrating agent;
(b) extruding said flame-retardant composition on an electrical conductor, which is optionally precoated with an insulating layer, so as to obtain a flame-retardant coating;
**characterized in that** preparing the flame-retardant composition comprises:
mixing the polymer base with the inorganic flame-retardant filler at a predetermined temperature and for a predetermined time so as to reduce moisture contained in the flame-retardant filler, and then
adding the dehydrating agent to the resulting mixture.

2. Process according to Claim 1, wherein the dehydrating agent is added during phase (a) of preparation of the flame-retardant composition.

3. Process according to Claim 1, wherein the dehydrating agent is added during phase (b) of extrusion of the flame-retardant composition.

4. Process according to any one of the preceding claims, wherein the polymer base is mixed with the inorganic flame-retardant filler at a temperature of at least 100°C for a time of at least 5 minutes.

5. Process according to any one of the preceding claims, wherein the dehydrating agent is added to the flame-retardant composition in divided form.

6. Process according to any one of the preceding claims, wherein the dehydrating agent is added to the flame-retardant composition after first being dispersed in a polymer material.

7. Process according to any one of the preceding claims, wherein the flame-retardant composition is extruded at a predetermined temperature which depends on the extrusion rate to be obtained.

8. Process according to Claim 7, wherein the flame-retardant composition is extruded at a temperature of between 160°C and 320°C.

9. Process according to Claim 8, wherein the flame-retardant composition is extruded at a temperature of between 200°C and 280°C.

10. Process according to any one of the preceding claims, wherein the dehydrating agent is chosen from:
calcium oxide, calcium chloride, anhydrous alumina, zeolites, magnesium sulphate, magnesium oxide, barium oxide, or mixtures thereof.

11. Process according to Claim 10, wherein the dehydrating agent is chosen from: calcium oxide and zeolites, or mixtures thereof.

12. Process according to any one of the preceding claims, wherein the dehydrating agent is added to the flame-retardant composition in an amount of between 0.5 and 15 % by weight relative to the weight of the flame-retardant filler.

13. Process according to Claim 12, wherein the dehydrating agent is added to the flame-retardant composition in an amount of between- 1 and 10 % by weight relative to the weight of the flame-retardant filler.

14. Process according to any one of the preceding claims, wherein the flame-retardant filler is chosen from: hydroxides, hydrated oxides, salts or hydrated salts of metals.

15. Process according to Claim 14, wherein the flame-retardant filler is chosen from: magnesium hydroxide, alumina trihydrate, hydrated magnesium carbonate, magnesium carbonate, hydrated calcium and magnesium carbonate, calcium and magnesium carbonate, or mixtures thereof.

16. Process according to Claim 15, wherein the flame-retardant filler is magnesium hydroxide.

17. Process according to Claim 15, wherein the flame-retardant filler is magnesium hydroxide of natural origin.

18. Flame-retardant composition comprising:
(a) a copolymer of ethylene with at least one α-olefin containing from 3 to 12 carbon atoms, and optionally with a diene, having a density of between 0.860 and 0.904 g/cm³ and a composition distribution index greater than 45 %, said index being defined as the percentage by weight of the copolymer molecules having an α-olefin content of up to 50 % of the total average molar content of α-olefin;
(b) natural magnesium hydroxide;
(c) a dehydrating agent.

19. Composition according to Claim 18, wherein the dehydrating agent is chosen from: calcium oxide, calcium chloride, anhydrous alumina, zeolites, magnesium sulphate, magnesium oxide, barium oxide, or mixtures thereof.

20. Composition according to Claim 19, wherein the dehydrating agent is chosen from: calcium oxide and zeolites, or mixtures thereof.

21. Composition according to any one of Claims 18 to 20, wherein the dehydrating agent is present in an amount of between 0.5 and 15 % by weight relative to the weight of the flame-retardant filler.

22. Composition according to Claim 21, wherein the dehydrating agent is present in an amount of between 1 and 10 % by weight relative to the weight of the flame-retardant filler.

23. Composition according to any one of Claims 18 to 22, wherein the copolymer of ethylene with at least one alpha-olefin, and optionally with a diene, is obtained by a single-site catalyst.

24. Composition according to Claim 23, wherein the copolymer of ethylene with at least one alpha-olefin, and optionally with a diene, is obtained by a metallocene catalyst.

25. Composition according to Claim 23, wherein the copolymer of ethylene with at least one alpha-olefin, and optionally with a diene, is obtained by a constrained geometry catalyst.

26. Composition according to any one of Claims 18 to 25, further comprising a crystalline propylene homopolymer or copolymer.

27. Composition according to any one of Claims 18 to 25, further comprising an ethylene homopolymer or copolymer having a density of between 0.905 and 0.970 g/cm³.

28. Composition according to any one of Claims 18 to 27, further comprising a coupling agent to enhance compatibility between the flame-retardant filler and the polymer base.

29. Composition according to Claim 28, wherein the coupling agent is chosen from: saturated silane compounds; silane compounds containing at least one ethylenic unsaturation; epoxides containing an ethylenic unsaturation; monocarboxylic acids or dicarboxylic acids and derivatives thereof having at least one ethylenic unsaturation.

30. Process for producing a flame-retardant composition, which comprises:
mixing a polymer base with an inorganic flame-retardant filler at a predetermined temperature and for a predetermined time so as to reduce moisture contained in the flame-retardant filler, and then
adding a dehydrating agent to the resulting mixture.

31. Process according to Claim 30, wherein the polymer base is mixed with the inorganic flame-retardant filler at a temperature of at least 100°C for a time of at least 5 minutes.

32. Cable comprising a conductor and at least one flame-retardant coating layer, **characterized in that** said at least one flame-retardant coating layer comprises a composition according to any one of Claims from 18 to 29.

## Patentansprüche

1. Verfahren zur Erzeugung eines selbstauslöschenden Kabels mit geringer Produktion von Rauch, umfassend:
(a) Herstellung einer flammwidrigen Zusammensetzung, umfassend eine Polymerbasis, einen anorganischen flammwidrigen Füllstoff und ein Dehydratisierungsmittel;
(b) Extrudieren der flammwidrigen Zusammensetzung auf einen elektrischen Leiter, der wahlweise mit einer isolationosvhicht vorbeschichtet ist, unter Erhalt einer flammwidrigen Beschichtung;
**dadurch gekennzeichnet, dass** die Herstellung der flammwidrigen Zusammensetzung umfasst:
Mischen der Polymerbasis mit dem anorganischen flammwidrigen Füllstoff bei einer vorbestimmten Temperatur und für eine vorbestimmte Zeit, zur Verminderung der Feuchtigkeit, die in dem flammwidrigen Füllstoff enthalten ist, und anschließende Zugabe des Dehydratisierungsmittels zur resultierenden Mischung.

2. Verfahren nach Anspruch 1, worin das Dehydratisierungsmittel während der Phase (a) der Herstellung der flammwidrigen Zusammensetzung zugegeben wird.

3. Verfahren nach Anspruch 1, worin das Dehydratisierungsmittel während der Phase (b) der Herstellung der flammwidrigen Zusammensetzung zugegeben wird.

4. Verfahren nach einem der vorhergehenden Ansprüche, worin die Polymerbasis mit dem anorganischen flammwidrigen
Füllstoff bei einer Temperatur von wenigstens 100°C für eine Zeit von wenigstens 5 Minuten vermischt wird.

5. Verfahren nach einem der vorhergehenden Ansprüche, worin das Dehydratisierungsmittel zu der flammwidrigen Zusammensetzung in unterteilter Form zugegeben wird.

6. Verfahren nach einem der vorhergehenden Ansprüche, worin das Dehydratisierungsmittel zu der flammwidrigen Zusammensetzung gegeben wird, nachdem es zunächst in einem Polymermaterial dispergiert ist.

7. Verfahren nach einem der vorhergehenden Ansprüche, worin die flammwidrige Zusammensetzung bei einer vorbestimmten Temperatur extrudiert wird, die von der zu erhaltenden Extrusionsrate abhängt.

8. Verfahren nach Anspruch 7, worin die flammwidrige Zusammensetzung bei einer Temperatur zwischen 160 und 320°C extrudiert wird.

9. Verfahren nach Anspruch 8, worin die flammwidrige Zusammensetzung bei einer Temperatur zwischen 200 und 280°C extrudiert wird.

10. Verfahren nach einem der vorhergehenden Ansprüche, worin das Dehydratisierungsmittel ausgewählt wird aus Kalziumoxid, Kalziumchlorid, wasserfreiem Alumina, Zeolithen, Magnesiumsulfat, Magnesiumoxid, Bariumoxid oder Mischungen davon.

11. Verfahren nach Anspruch 10, worin das Dehydratisierungsmittel ausgewählt wird aus Kalziumoxid und Zeolithen oder Mischungen davon.

12. Verfahren nach einem der vorhergehenden Ansprüche, worin
das Dehydratisierungsmittel zu der flammwidrigen Zusammensetzung in einer Menge zwischen 0,5 und 15 Gew.-% bezogen auf das Gewicht des flammwidrigen Füllstoffes, zugegeben wird.

13. Verfahren nach Anspruch 12, worin das Dehydratisierungsmittel zu der flammwidrigen Zusammensetzung in einer Menge zwischen 1 und 10 Gew.-%, bezogen auf das Gewicht des flammwidrigen Füllstoffes, zugegeben wird.

14. Verfahren nach einem der vorhergehenden Ansprüche, worin der flammwidrige Füllstoff ausgewählt wird aus Hydroxiden, hydratisierten Oxiden, Salzen oder hydratisierten Salzen von Metallen.

15. Verfahren nach Anspruch 14, worin der flammwidrige Füllstoff ausgewählt wird aus: Magnesiumhydroxid, Aluminatrihydrat, hydratisiertem Magnesiumcarbonat, Magnesiumcarbonat, hydratisiertem Kalzium- und Magnesiumcarbonat, Kalzium- und Magnesiumcarbonat oder Mischungen davon.

16. Verfahren nach Anspruch 15, worin der flammwidrige Füllstoff Magnesiumhydroxid ist.

17. Verfahren nach Anspruch 15, worin der flammwidrige Füllstoff Magnesiumhydroxid natürlichen Ursprungs ist.

18. Flammwidrige Zusammensetzung, umfassend:
(a) ein Copolymer aus Ethylen mit zumindest einem α-Olefin, umfassend 3 bis 12 Kohlenstoffatome, und wahlweise mit einem Dien, mit einer Dichte zwischen 0,860 und 0,904 g/cm³ und einem Zusammensetzungsverteilungsindex von mehr als 45%, wobei der Index als Gewichtsprozentsatz der Copolymermoleküle mit einem α-Olefingehalt von bis zu 50% des gesamten durchschnittlichen molaren Gehaltes von α-olefin definiert ist;
(b) natürliches Magensiumhydroxid;
(c) ein Dehydratisierungsmittel.

19. Zusammensetzung nach Anspruch 18, worin das Dehydratisierungsmittel ausgewählt ist aus: Kalziumoxid, Kalziumchlorid, wasserfreiem Alumina, Zeolithen, Magnesiumsulfat, Magnesiumoxid, Bariumoxid oder Mischungen davon.

20. Zusammensetzung nach Anspruch 19, worin das Dehydratisierungsmittel ausgewählt ist aus Kalziumchlorid und Zeolithen oder Mischungen davon.

21. Zusammensetzung nach einem der Ansprüche 18 bis 20, worin das Dehydratisierungsmittel in einer Menge zwischen 0,5 und 15 Gew.-%, bezogen auf das Gewicht des flammwidrigen Füllstoffes, vorhanden ist.

22. Zusammensetzung nach Anspruch 21, worin das Dehydratisierungsmittel in einer Menge zwischen 1 und 10 Gew.-%, bezogen auf das Gewicht des flammwidrigen Füllstoffes, vorhanden ist.

23. Zusammensetzung nach einem der Ansprüche 18 bis 22, worin das Copolymer aus Ethylen mit zumindest einem α-Olefin und wahlweise mit einem Dien durch einen Einzelstellenkatalysator erhalten ist.

24. Zusammensetzung nach Anspruch 23, worin das Copolymer aus Ethylen mit zumindest einem α-Olefin und gegebenenfalls einem Dien durch einen Metallocenkatalysator erhalten ist.

25. Zusammensetzung nach Anspruch 23, worin das Copolymer aus Ethylen mit zumindest einem α-Olefin und wahlweise einem Dien durch einen Katalysator mit eingeschränkter Geometrie erhalten ist.

26. Zusammensetzung nach einem der Ansprüche 18 bis 25, weiterhin umfassend ein kristallines Propylenhomopolymer oder -Copolymer.

27. Zusammensetzung nach einem der Ansprüche 18 bis 25, weiterhin umfassend ein Ethylenhomopolymer oder -Copolymer mit einer Dichte von 0,905 bis 0,970 g/cm³.

28. Zusammensetzung nach einem der Ansprüche 18 bis 27, weiterhin umfassend ein Kupplungsmittel zur Verstärkung der Kompatibilität zwischen dem flammwidrigen Füllstoff und der Polymerbasis.

29. Zusammensetzung nach Anspruch 28, worin das Kupplungsmittel ausgewählt ist aus: gesättigten Silanverbindungen; Silanverbindungen, umfassend zumindest eine ethylenische Unsättigung; Epoxiden, umfassend eine ethylenische Unsättigung; Monocarbonsäuren oder Dicarbonsäuren und Derivaten davon mit zumindest einer ethylenischen Unsättigung.

30. Verfahren zur Erzeugung einer flammwidrigen Zusammensetzung, umfassend:
Mischen einer Polymerbasis mit einem anorganischen flammwidrigen Füllstoff bei einer vorbestimmten Temperatur und für eine vorbestimmte Zeit, zur Verminderung der Feuchtigkeit, die in dem flammwidrigen Füllstoff enthalten ist, und anschließende Zugabe eines Dehydratisierungsmittels zu der resultierenden Mischung.

31. Verfahren nach Anspruch 30, worin die Polymerbasis mit dem anorganischen flammwidrigen Füllstoff bei einer Temperatur von zumindest 100°C für eine Zeit von wenigstens 5 Minuten vermischt wird.

32. Kabel, umfassend einen Leiter und zumindest eine flammwidrige Beschichtungsschicht, **dadurch gekennzeichnet, dass** die zumindest eine flammwidrige Beschichtungsschicht eine Zusammensetzung gemäß einem der Ansprüche 18 bis 29 umfasst.

## Revendications

1. Procédé de production d'un câble auto-extinguible dégageant un niveau faible de fumées, comprenant les étapes suivantes :
(a) préparation d'une composition ignifuge comprenant une base polymère, une charge ignifuge inorganique et un agent déshydratant
(b) extrusion de ladite composition ignifuge sur un conducteur électrique, le cas échéant pré-revêtu d'une couche isolante, de manière à obtenir un revêtement ignifuge ;
**caractérisé en ce que** la préparation de la composition ignifuge comprend :
le mélangeage de la base polymère avec la charge ignifuge inorganique à une température prédéterminée et pendant une durée prédéterminée afin de réduire l'humidité contenue dans la charge ignifuge, suivi de
l'ajout de l'agent déshydratant au mélange ainsi obtenu.

2. Procédé selon la revendication 1, dans lequel l'agent déshydratant est ajouté pendant l'étape (a) de préparation de la composition ignifuge.

3. Procédé selon la revendication 1, dans lequel l'agent déshydratant est ajouté pendant l'étape (b) d'extrusion de la composition ignifuge.

4. Procédé selon l'une quelconque des revendications précédentes, dans lequel la base polymère est mélangée avec la charge ignifuge inorganique à une température au moins égale à 100 °C pendant une durée d'au moins 5 minutes.

5. Procédé selon l'une quelconque des revendications précédentes, dans lequel l'agent déshydratant est ajouté à la composition ignifuge sous forme divisée.

6. Procédé selon l'une quelconque des revendications précédentes, dans lequel l'agent déshydratant est ajouté à la composition ignifuge après avoir été d'abord dispersé dans un matériau polymère.

7. Procédé selon l'une quelconque des revendications précédentes, dans lequel la composition ignifuge est extrudée à une température prédéterminée qui dépend de la vitesse d'extrusion à atteindre.

8. Procédé selon la revendication 7, dans lequel la composition ignifuge est extrudée à une température allant de 160 °C à 320 °C.

9. Procédé selon la revendication 8, dans lequel la composition ignifuge est extrudée à une température allant de 200 °C à 280 °C.

10. Procédé selon l'une quelconque des revendications précédentes, dans lequel l'agent déshydratant est choisi parmi l'oxyde de calcium, le chlorure de calcium, l'alumine anhydre, les zéolites, le sulfate de magnésium, l'oxyde de magnésium, l'oxyde de baryum ou des mélanges de ces substances.

11. Procédé selon la revendication 10, dans lequel l'agent déshydratant est choisi parmi l'oxyde de calcium et les zéolites ou des mélanges de ces substances.

12. Procédé selon l'une quelconque des revendications précédentes, dans lequel l'agent déshydratant est ajouté à la composition ignifuge en une quantité allant de 0,5 à 15 % en poids, ramenée au poids de la charge ignifuge.

13. Procédé selon la revendication 12, dans lequel l'agent déshydratant est ajouté à la composition ignifuge en une quantité allant de 1 à 10 % en poids, ramenée au poids de la charge ignifuge.

14. Procédé selon l'une quelconque des revendications précédentes, dans lequel la charge ignifuge est choisie parmi des hydroxydes, des oxydes hydratés, des sels ou des sels hydratés de métaux.

15. Procédé selon la revendication 14, dans lequel la charge ignifuge est choisie parmi l'hydroxyde de magnésium, l'alumine trihydratée, le carbonate de magnésium hydraté, le carbonate de magnésium, le carbonate de calcium et magnésium hydraté, le carbonate de calcium et magnésium, ou des mélanges de ces substances.

16. Procédé selon la revendication 15, dans lequel la charge ignifuge est de l'hydroxyde de magnésium.

17. Procédé selon la revendication 15, dans lequel la charge ignifuge est de l'hydroxyde de magnésium d'origine naturelle.

18. Composition ignifuge comprenant :
(a) un copolymère d'éthylène avec au moins une α-oléfine contenant de 3 à 12 atomes de carbone, et le cas échéant avec un diène, ayant une densité comprise entre 0,860 et 0,904 g/cm³ et un indice de distribution de la composition supérieur à 45 %, ledit indice étant défini comme le pourcentage en poids des molécules de copolymère dont la teneur en α-oléfine va jusqu'à 50 % de la teneur moyenne totale en moles d'α-oléfine ;
(b) de l'hydroxyde de magnésium naturel ;
(c) un agent déshydratant.

19. Composition selon la revendication 18, dans laquelle l'agent déshydratant est choisi parmi l'oxyde de calcium, le chlorure de calcium, l'alumine anhydre, les zéolites, le sulfate de magnésium, l'oxyde de magnésium, l'oxyde de baryum ou des mélanges de ces substances.

20. Composition selon la revendication 19, dans lequel l'agent déshydratant est choisi parmi l'oxyde de calcium et les zéolites ou des mélanges de ces substances.

21. Composition selon l'une quelconque des revendications 18 à 20, dans laquelle l'agent déshydratant est présent en une quantité allant de 0,5 à 15 % en poids, ramenée au poids de la charge ignifuge.

22. Composition selon la revendication 21, dans laquelle l'agent déshydratant est présent en une quantité allant de 1 à 10 % en poids, ramenée au poids de la charge ignifuge.

23. Composition selon l'une quelconque des revendications 18 à 22, dans laquelle le copolymère d'éthylène avec au moins une alpha-oléfine, et le cas échéant avec un diène, est obtenu en utilisant un catalyseur monosite.

24. Composition selon la revendication 23, dans laquelle le copolymère d'éthylène avec au moins une alpha-oléfine, et le cas échéant avec un diène, est obtenu en utilisant un catalyseur à base de métallocène.

25. Composition selon la revendication 23, dans laquelle le copolymère d'éthylène avec au moins une alpha-oléfine, et le cas échéant avec un diène, est obtenu en utilisant un catalyseur à géométrie contrainte.

26. Composition selon l'une quelconque des revendications 18 à 25, comprenant en plus un homopolymère ou copolymère de propylène cristallin.

27. Composition selon l'une quelconque des revendications 18 à 25, comprenant en plus un homopolymère ou copolymère d'éthylène ayant une densité comprise entre 0,905 et 0,970 g/cm³.

28. Composition selon l'une quelconque des revendications 18 à 27, comprenant en plus un agent de pontage pour améliorer la compatibilité entre la charge ignifuge et la base polymère.

29. Composition selon la revendication 28, dans laquelle l'agent de pontage est choisi parmi des composés de silane saturés ; des composés de silane contenant au moins une insaturation éthylénique ; des époxydes contenant une insaturation éthylénique ; des acides monocarboxyliques ou dicarboxyliques et des dérivés de ceux-ci ayant au moins une insaturation éthylénique.

30. Procédé de production d'une composition ignifuge, comprenant :
le mélangeage d'une base polymère avec une charge ignifuge inorganique à une température prédéterminée et pendant une durée prédéterminée afin de réduire l'humidité contenue dans la charge ignifuge, suivi de
l'ajout de l'agent déshydratant au mélange ainsi obtenu.

31. Procédé selon la revendication 30, dans lequel la base polymère est mélangée avec la charge ignifuge inorganique à une température au moins égale à 100 °C pendant une durée d'au moins 5 minutes.

32. Câble comprenant un conducteur et au moins une couche de revêtement ignifuge, **caractérisé en ce que** ladite au moins une couche de revêtement ignifuge comprend une composition selon l'une quelconque des revendications 18 à 29.
